# EUROPEAN PATENT APPLICATION

(11) **EP 4 611 203 A1**
(43) Date of publication of application: **03.09.2025**
(21) Application number: 24159827.5
(22) Date of filing: 27.02.2024
(51) Int. Cl.: H02J 3/14

(54) **METHOD FOR DISTRIBUTING ELECTRICAL POWER**

(71) Applicant: ABB SCHWEIZ AG, 5400 Baden (CH)
(72) Inventor: ALEKSY, Markus, 67065 Ludwigshafen (DE); BAUER, Philipp, 69469 Weinheim (DE); BISKOPING, Matthias, 69493 Hirschberg (DE); FOKKEN, Eike, 69214 Eppelheim (DE); GUTERMUTH, Georg, 69115 Heidelberg (DE); KARAAGAC, Abdulkadir, 68526 Ladenburg (DE); SCHLOEDER, Matthias, 69126 Heidelberg (DE); PRIMAS, Bernhard, 68165 Mannheim (DE)
(74) Representative: Maiwald GmbH

(57) **Abstract**

The present disclosure is directed to a method for distributing electrical power among a plurality of households, wherein a plurality of electrical devices are provided per household, at least some of which are generating devices for generation of electrical power by solar energy and optionally storing devices for storage of electrical power, and some of which are consuming devices for consumption of electrical energy, and a user database comprising details on the households, and a device database comprising details on the plurality of electrical devices are provided.

## Description

### Technical field

The present invention relates to a method for distributing electrical power among a plurality of households, a corresponding system, a corresponding computer program, and corresponding data processing apparatus.

### Background

Often, there is an interest by private households to install, for example at the balcony or terrace, a (small) solar energy plant. This interest is increasing, as bureaucratic obstacles have been alleviated. In particular, it may no longer be necessary to apply for a permit for a small, private solar energy plant. Also energy, in particular electric energy, is becoming more and more expensive. Hence, households may want be able to generate electrical power by means of their own energy generating devices based on solar energy. However, at the moment, storage of the energy generated is, in the absence of cheap, appropriate batteries, often an issue. More specifically, households may lack an appropriate battery for storage of energy which is privately generated, but not immediately consumed.

There is a desire to avoid loss of energy in such constellations.

### Summary

The present invention is directed to a method for distributing electrical power among a plurality of households, wherein a plurality of electrical devices are provided per household, at least some of which are generating devices for generation of electrical power by solar energy and optionally storing devices for storage of electrical power, and some of which are consuming devices for consumption of electrical energy, and a user database comprising details on the households, and a device database comprising details on the plurality of electrical devices are provided, the method comprising.:
- planning by means of a planning unit the distribution amongst the households of electrical power generated by the generating devices, wherein planning includes, preferably computer-implemented, steps based on the history of previous plannings (plans, schedulings) and considers at least the following criteria:
   - times of expected high and low power consumption of at least one household, and
   - electrical power expected to be generated by the generating devices during a (e.g. predetermined) time period of at least one household,
   - wherein electrical power generated by the generating devices of the at least one household is planned to be shared with another household for the time period, if the at least one household expects a low power consumption for the time period, so that excess electrical energy generated by generating devices of the at least one household and not stored by storing devices of the same household or consumed by consuming devices of the same household may be used (i.e. consumed or stored) by another household.

Optionally, the method includes the following additional steps:
- providing a plurality of electrical devices per household, at least some of which are functional devices including generating devices for generation of electrical power by solar energy and optionally storing devices for storage of electrical power, and some of which are consuming devices for consumption of electrical energy, and
- providing a user database comprising details on the households, and a device database comprising details on the plurality of electrical devices,
- providing a planning unit configured for planning distribution amongst the households of electrical power generated by the generating devices, wherein planning includes computer-implemented steps based on the history of previous planning and considers at least times of expected high and low power consumptions of at least one household, and electrical power expected to be generated by the generating devices, wherein electrical power generated by generating devices of one household is planned to be consumed by another household for a time period, if the at least one household expects a low power consumption and the other household expects a high power consumption during the time period, so as to ensure that excess electrical energy generated by generating devices of one household and not stored by storing devices of the same household or consumed by consuming devices of the same household is used by another household, and- distributing the electrical power as generated amongst the households based on the planned distribution.

Accordingly, energy may be shared between households, so as to avoid that energy is lost as the household which has generated the energy does not use/consume the entire energy as generated by the household.

Households which are located in the same building, for example, in the same multiple family house, in a multiple dwelling unit or in an apartment house, may share energy according to the invention. In particular, residential campuses are considered. It is, however, not excluded that households are located in different buildings, but e.g. neighbored to each other. It is even conceivable that households are distantly located from each other, e.g. in different streets or even in different cities.

Electrical devices generating electrical energy by solar energy may be balcony or terrace photovoltaic plants, e.g. balcony power plants. These devices may typically belong to a household, i.e. are private, local devices. The electrical devices include the energy generating devices for generation of electrical power by solar energy, and optionally energy storing devices for storage of electrical power, and energy consuming devices for consumption of electrical energy.

The invention allows to utilize or exploit energy as generated privately (i.e. by a single household) to a higher degree, i.e. to avoid energy being lost. In particular, a single household may typically not use all the energy generated by their generating device(s) when they are on holiday. However, a neighbored household may not be on vacation at that moment and may be happy consume "extra" energy, e.g. for their air conditioner. Also, different user behaviors per household caused by different working or life styles may be compensated by sharing energy, as proposed by the invention. This may include considerations on times of expected high and low power consumptions of a household, e.g. including the presence or absence of users in the households. Often, a household does not have its own energy storing device, i.e. an own battery, which may be the battery of an electric car. If one of the other households has an energy storage device, it may receive excess energy from another household for storage thereof.

The idea of the invention is to share energy with other households, e.g. neighbors, based on a distribution of energy, which allows for reliable planning and scheduling, is less prone to errors, and is comfortable for the users. In particular, the invention allows for predictions of energy demands and energy offers, based on the electrical devices participating in the distribution and the planning unit. This provides a basis for optimization of energy usage to the effect that no energy is lost, i.e. not used. This may support exchange of locally generated energy, possibly based on existing infrastructure, to gain higher benefit from local energy generating installations. Basis for this are previous plannings, i.e. previous energy distributions. Hence, a distribution does not need to be made each time new/fresh, but may be based on the history. This may reduce the effort and/or increase the comfort, e.g. by providing an artificial intelligence (Al)- and context-based energy-usage system, for efficient control of (local) energy consumption.

Optionally, the planning includes suggesting a plan for power distribution based on historic data corresponding to a period of time, e.g. the weekday and/or month of the day and/or month to be scheduled. For example, such plan may set starting the sharing of an asset at 13:30, ending sharing 23:59. This may make the planning more reliable and correct, wherein users may conveniently work on the basis of the suggestion made by the planning unit.

Optionally, in a user unit, preferences of households are stored, in particular relative to other households. For example, one household may not want to share energy with another specific household. This may reflect social components of sharing.

Optionally, in a device unit, the availability or unavailability of electrical devices is stored. This improves the energy exploitation in that the actually available and participating electrical devices are correctly determined, so that the planning correctly reflects the later distribution.

Optionally, by means of an automation unit, wire-bound or wire-less communication and/or communication based on a protocol, such as a BACNET, KNX, MODBUS or MQTT or other protocol is performed. The system is versatile in that a number of different communication channels are available for communication with automation units. This may make the system modular in that an automation system a household already uses locally can be integrated in the system.

Optionally, by way of a recommender unit, an artificial intelligence plans the distribution of electrical energy amongst the households, in particular based on previous distributions. This simplifies the use for the households. Possibly, the efforts are reduced to checking the correctness of the suggestion made by the artificial intelligence.

Optionally, by way of an energy database, the amount of energy as generated and shared, and the energy as received per household is stored. This provides for transparency and may support willingness of households to share their energy.

Optionally, by way of an accounting unit, the net energy exchange per household in a predetermined time period is determined by comparing the amount of energy as generated and shared, with the amount of energy as received. This provides for transparency and may support willingness of households to share their energy.

Optionally, by way of a gateway, the price on the energy market for the amount of energy as received and/or shared is determined. The may allow to fulfill monetary interests for users/households having much energy to share to participate. At the same time, this may also allow households not having any energy to be shared to participate.

The invention also provides a system for distributing electrical power among a plurality of households, the system having a data processing system configured to carry out the method of the invention.

The invention also provides a computer program product comprising instructions which, when the program is executed by a computer, cause the computer to carry out any of the methods of the present invention.

The invention also provides a computer-readable medium comprising instructions which, when executed by a computer, cause the computer to carry out any of the methods of the present invention.

The features and advantages outlined above in the context of the method equally apply to the system, the computer program, and the data processing apparatus described herein.

### Brief description of the drawing

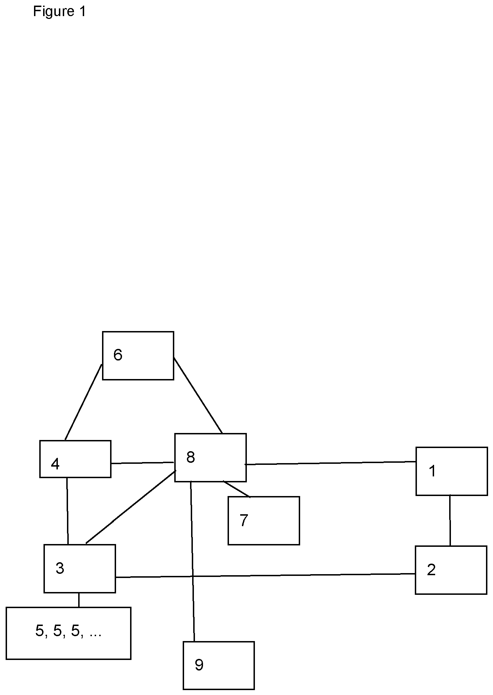

Figure 1 shows a schematic diagram of a system of the invention.

### Detailed description

Figure 1 shows a schematic overview of units of the system of the invention.

A user unit 1 as user management component allows for the definition of users (households) of the system and manages the scope of access (visible content) to the users.

The device unit 2 as asset management component manages the devices 5 (assets) that will be shared among users. Every asset owner (household) can register assets 5 that the user is willing to share with other users. Assets 5 that are not available for sharing anymore can be unregistered here as well.

The device unit 2 is provided where households (asset owners) can register their electrical devices 5 (assets), like a (balcony) PV, a battery storage, e-cars, etc. Also, the households may register the dates and times in the user database 1, when these devices 5 may not be used by the owners themselves (the same household). The device unit (2) is configured to store the availability or unavailability of electrical devices.

Community participants, i.e. another household, may enter the dates / times in the user database 1, e.g. when they would have higher energy-usage demands, and may then use the installation(s) (device 5) of their neighbor(s) for a predefined period of time. The user unit 1 is configured to store preferences of households, in particular relative to other households.

The automation unit 3 as building or home automation system enables the (physical) control of the devices 5. The automation unit 3 is configured for wire-bound or wire-less communication and/or communication preferably based on a BACNET, KNX, MODBUS or MQTT protocol for communication.

The planning unit 4 is configured to suggest a plan for power distribution based on historic data corresponding to period of time, e.g. a time slot, such as the weekday and/or month of the day and/or month to be scheduled. In particular, the result of the planning is not limited to a whole day but can be broken down to hours & minutes (e.g. starting the sharing of an asset at 13:30, ending sharing 23:59).

The recommender unit 6 may be Al-based in that it analyses historical day/time-information regarding devices sharing/usage and creates recommendations for sharing/using devices 5 based on the result of past user behavior patterns. The recommender unit 6 may provide recommendations to the planning unit 4. The recommender unit 6 is configured to distribute electrical power using an artificial intelligence to plan the distribution of electrical energy amongst the households, in particular based on previous distributions/plans.

The energy database 7 keeps track regarding provided and consumed energy. The energy database 7 is configured to store the amount of energy as generated and shared, and the energy as received per household.

The accounting unit 8 represents a software trading platform, on the basis of the energy database 7. The accounting unit 8 is configured to determine the net energy exchange per household in a predetermined time period by comparing amount of the energy as generated and shared, with the amount of energy as received. This may be done in a consumption-based way (kWh-based) or money based. kWh based-accounting is based on provided and consumed energy only in kWh (heading provided energy to the account, removing consumed energy from the account), while money-based accounting considers current energy market price.

An optional gateway 9 may represent an interface for the accounting unit 8 that enables receiving current energy pricing information in case a monetary accounting model is favored. The gateway 9 is configured for determining the price on the energy market for the amount of energy as received and/or shared. Thus, it requires access to current energy market price information. In general, it works like the kWh-based approach, but energy-usage is related to the current market price and the account model is monetary.

This may allow for efficient control of (local) energy consumption, including that households (owners) can gain higher benefit from their local installations. The devices 5 are utilized to a higher degree, the advantages are scalable from 2 parties/households to N parties/households. A system operator may receive a provision from the participating households/users.

### Reference signs

- 1: User unit
- 2: Device unit
- 3: (Building/home) automation unit
- 4: Planning unit (scheduler)
- 5: Electrical devices (assets)
- 6: Recommender unit (Al)
- 7: Energy unit (database)
- 8: Accounting unit (trader)
- 9: Gateway

## Claims

1. Method for distributing electrical power among a plurality of households, wherein a plurality of electrical devices (5) are provided per household, at least some of which are generating devices (5) for generation of electrical power by solar energy and optionally storing devices for storage of electrical power, and some of which are consuming devices for consumption of electrical energy, and a user database (1) comprising details on the households, and a device database (2) comprising details on the plurality of electrical devices are provided, the method comprising:
- planning by means of a planning unit (4) the distribution of electrical power generated by the generating devices amongst the households, wherein planning includes, preferably computer-implemented, steps based on the history of previous plannings and considers at least the following criteria:
- times of expected high and low power consumption of at least one household, and
- electrical power expected to be generated by generating devices of at least one household during a time period,
- wherein electrical power generated by generating devices of the at least one household is planned to be shared with another household during the time period, if the at least one household expects a low power consumption during the time period, so that excess electrical energy generated by generating devices of a household and not stored by storing devices of the same household or consumed by consuming devices of the same household is used by another household.

2. Method of claim 1, wherein the planning includes suggesting a plan for power distribution based on historic data corresponding to a period of time, optionally the weekday and/or month of the day and/or month to be scheduled.

3. Method of claim 1 or 2, wherein in a user unit (1), preferences of the plurality of households are stored, in particular preferences of a household relative to other households.

4. Method of any of the preceding claims, wherein, in a device unit (2), the availability or unavailability of electrical devices is stored.

5. Method of any of the preceding claims, wherein, by means of an automation unit (3), wire-bound or wire-less communication and/or communication based on a protocol, optionally a BACNET, KNX, MODBUS or MQTT protocol, is performed.

6. Method of any of the preceding claims, wherein, by way of a recommender unit (6), an artificial intelligence plans the distribution of electrical energy amongst the households, in particular based on previous distributions.

7. Method of any of the preceding claims, wherein, by way of an energy database (7), the amount of energy as generated and shared per household, and the energy as received per household is stored.

8. Method of claim 7, wherein, by way of an accounting unit (8), the net energy exchange per household in a predetermined time period is determined by comparing per household the amount of energy as generated and shared, with the amount of energy as received.

9. Method of claim 8, wherein, by way of a gateway (9), the price on the energy market for the amount of energy as received and/or shared is determined.

10. System for distributing electrical power among a plurality of households, the system having a data processing system configured to carry out the method of any of the preceding claims.

11. Data processing apparatus comprising means for carrying out the steps of the method of claims 1 to 10.

12. A computer program comprising instructions which, when the program is executed by a computer, cause the computer to carry out the steps of the method of claims 1 to 10.
